# EUROPEAN PATENT APPLICATION

(11) **EP 4 794 063 A1**
(43) Date of publication of application: **19.08.2026**
(21) Application number: 25158391.0
(22) Date of filing: 17.02.2025
(51) Int. Cl.: H01M 10/6567, H01M 50/383, H01M 50/682, H01M 50/209, H01M 50/289

(54) **BATTERY PACK AND VEHICLE INCLUDING THE SAME**

(71) Applicant: SAMSUNG SDI CO., LTD., Yongin-si, Gyeonggi-do 17084 (KR)
(72) Inventor: Reinprecht, Wolfgang, 8144 Attendorf (AT); Hofer, Georg, 8053 Graz (AT); Musa, Bardh, 8053 Graz (AT)
(74) Representative: Gulde & Partner

(57) **Abstract**

The present disclosure refers to a battery pack, including a battery pack housing; a battery cell stack including a plurality of rechargeable battery cells, wherein the battery cell stack is accommodated within the battery pack housing; a liquid release system positioned above the rechargeable battery cells, wherein the liquid release system is configured to release a liquid toward the rechargeable battery cells when a release condition is detected; and a retention structure being configured for retaining the liquid released by the liquid release system, wherein the retention structure is in direct contact with an outer surface of the rechargeable battery cells.

## Description

### Field of the Disclosure

Embodiments of the present disclosure relate to a battery pack configured for preventing or suppressing a thermal runaway. Further, embodiments of the present disclosure refer to an electric vehicle including the battery pack.

### Technological Background

Recently, vehicles for transportation of goods and people have been developed that use electric power as a source of motion. Such an electric vehicle is an automobile that is propelled either permanently or temporarily by an electric motor using energy stored in rechargeable batteries. An electric vehicle may be solely powered by batteries (known as a Battery Electric Vehicle (BEV)) or may include a combination of an electric motor and, for example, a conventional combustion engine (known as a Plug-in Hybrid Electric Vehicle (PHEV)). Both BEVs and PHEVs use high-capacity rechargeable batteries designed to provide power for propulsion over sustained periods of time.

Generally, a rechargeable (or secondary) battery cell includes an electrode assembly including a positive electrode, a negative electrode, and a separator interposed between those electrodes. A solid or liquid electrolyte enables movement of ions during the charging and discharging of the battery cell. The electrode assembly is located in a casing, and electrode terminals, which are positioned on the outside of the casing, establish an electrically conductive connection to the electrodes. Common battery cell formats include, for example, cylindrical, prismatic, and pouch.

A battery module is formed of a plurality of battery cells connected together in series or parallel. That is, the battery module is formed by interconnecting the electrode terminals of the plurality of battery cells, depending on a desired amount of power and in order to realize a high-power rechargeable battery.

Battery modules can be constructed either in a block design or a modular design. In the block design, each battery cell is coupled to a common current collector structure and a common cell management unit, and arranged in a housing. In the modular design, several battery cells are connected together to form submodules and several submodules are connected together to form the battery module. In automotive applications, battery systems often include a plurality of battery modules connected together in series to provide a desired voltage.

A battery pack is a set of any number of (for example, identical) battery modules and/or individual battery cells. The battery modules and/or battery cells may be configured in a series, parallel or a combination of both to deliver the desired voltage, capacity, and/or power density. Components of a battery pack include the individual battery modules and the interconnects, which provide electrical conductivity between the battery modules.

A battery system may also include a battery management system (BMS), which is any suitable electronic system configured to manage the rechargeable battery cell, battery module, and battery pack, such as by protecting the batteries from operating outside their safe operating area, monitoring their states, calculating secondary data, reporting that data, controlling their environment, authenticating them and/or balancing them. For example, the BMS may monitor the state of the battery cell as indicated by voltage (e.g., a total voltage of the battery pack or battery modules, and/or voltages of individual battery cells), temperature (e.g., an average temperature of the battery pack or battery modules, coolant intake temperature, coolant output temperature, or temperatures of individual battery cells), coolant flow (e.g., flow rate and/or cooling liquid pressure), and current. Additionally, the BMS may calculate values based on the above characteristics or measured values, such as minimum and maximum cell voltage, state of charge (SOC) or depth of discharge (DOD) to indicate the charge level of the battery cell, state of health (SOH; a variously-defined measurement of the remaining capacity of the battery cell as a percentage of the original capacity), state of power (SOP; the amount of power available for a defined time interval given the current power usage, temperature, and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. In other examples, the BMS may also be distributed, with a BMS board installed at each cell, and with just a single communication cable between the battery cell and a controller. In yet other examples, the BMS may have a modular construction including a few controllers, each handling a certain number of cells, while communicating between the controllers. Centralized BMSs are the most economical but the least expandable and are plagued by a multitude of wires. Distributed BMSs are the most expensive but are the simplest to install and offer the cleanest assembly. Modular BMSs provide a compromise of the features and problems of the other two topologies.

The BMS may protect the battery pack from operating outside its safe operating area. Operation outside the safe operating area may be indicated by overcurrent, over-voltage (during charging), over-temperature, under-temperature, overpressure, and ground fault or leakage current detection. The BMS may prevent the battery from operating outside its safe operating parameters by including an internal switch (e.g., a relay or solid-state device) that opens if the battery is operated outside its safe operating parameters, requesting the devices to which the battery is connected to reduce or even terminate use of the battery, and actively controlling the environment, such as through heaters, fans, air conditioning, or liquid cooling.

In electric vehicles, the Cell Contacting System (CCS) represents the initial stage of electrical power transmission between the battery cell and consumers or power sources. The number of battery cells in electric vehicles typically ranges from a few hundred to a few thousand. A fully charged lithium-ion single cell typically exhibits a maximum voltage of 4.2 V, with the capacity enabling the delivery of currents in the range of a few amperes up to several hundred amperes. Battery systems for passenger cars operate with voltages between 400 V and 800 V and must be capable of delivering currents of up to 500 A or more. In order to achieve the requisite voltage and current levels, individual battery cells are connected in parallel and in series.

Therefore, the battery cells are grouped into several functional blocks, which are then connected electrically to form the overall battery system. The aforementioned blocks are reinforced within a housing structure and collectively referred to as a battery module. While the battery modules are typically connected in series, the battery cells within the modules are connected in both parallel and series. In the case of cylindrical battery cells, which are relatively small, a number of cells are connected in parallel. For larger battery cells, it is not uncommon for only two to be connected in parallel, or for there to be a pure series connection. It is precisely this electrical interconnection of the battery cells at the module level that the CCS assumes. Consequently, the CCS is available in a multitude of designs and geometries, specifically adapted to the respective battery module.

In addition to the electrical interconnection of the individual battery cells, the CCS is also responsible for implementing and integrating other functions. These primarily include potential points for voltage monitoring and temperature-dependent resistors (thermistors) for temperature measurement at critical points. Furthermore, it is essential to ensure that the aforementioned signals are conveyed to the battery management system (BMS) at the module level. This system is also known as the cell monitoring unit (CMU) or BMS slave. The additional functions allow for further expansion of the options for the structure, geometry, and materials of the CCS.

To fulfill its function, the CCS must be capable of compensating for the tolerances that arise between individual battery cells during the assembly process. Furthermore, it must be able to maintain the lowest possible resistance with the battery cells over the entire life cycle. The CCS is exposed to vibrations and shocks during operation, as well as to changes in the dimensions of the battery cell resulting from the charging and discharging processes. Additionally, temperature variations within the system give rise to additional mechanical stress due to differing expansion rates. In the event of an alteration or failure in the interconnection between the battery cells, this will result in the emergence of undefined conditions within the battery system. Consequently, individual battery cells may become either undercharged or overcharged due to a change in resistance, or they may become completely decoupled. This places an increased burden on the remaining battery cells, which in turn leads to accelerated aging and an increased safety risk. Furthermore, there is a risk of the system failing or becoming impaired in its functionality. For this reason, the CCS plays a crucial role in ensuring quality and safety within the battery system. In essence, the CCS can be distinguished by the design and selection of materials used in the construction of its individual components, as well as the manner in which individual components are integrated into a comprehensive CCS system. Moreover, there are notable differences in the design of the CCS for various battery cell formats, including cylindrical, prismatic, and pouch. It is not the case that any single design is suitable for all possible cell formats.

A fundamental component of the CCS, that facilitates the electrical connection between individual battery cells, is a stamped, folded, and occasionally laser-cut sheet metal element, which is henceforth referred to as a busbar. The materials commonly used include nickel-plated copper, coated aluminum and steel. The busbar can be positioned directly on the battery cells as an individual part or initially mounted in a plastic frame, which subsequently contains all the connectors for an entire battery module. Furthermore, the plastic frame can accommodate the conductor tracks or cables of the sensors or the entire printed circuit board (PCB) of the CMU, which is responsible for converting the analogue sensor values into digital ones and transmitting them to the central BMS (the BMS-master). This integration significantly reduces the time and effort required for mounting the CCS during module production. Moreover, the potential connections can be partially replaced by direct connections of the busbars to the BMS slaves. Another method for integrating the individual components is the production of a laminated CCS. In this case, the aforementioned components are laminated into a multi-layer structure comprising composite foils or attached to a carrier foil. Additionally, flat plastic components can be used to reinforce the composite structure. Furthermore, this approach results in a notable reduction in the effort required for module assembly, as only a single component needs to be placed and connected.

The sensors incorporated into the CCS are connected to the CMU either in a cable configuration or as a flexible printed circuit (FPC). In the cable configuration, each potential tap or thermistor is provided with an individual cable. These are typically mounted in a complex manner, either within the CCS or as part of the module assembly process, and connected to the CMU. In contrast, the use of an FPC enables the creation of a single component that incorporates the various sensors and cables, and which is then connected to the CMU via a connector. Regarding the sensor, it is either connected directly to the cell terminal or attached to the busbar, achieved through the processes of welding or bonding. The version with cables is either mounted directly in the module production process or connected to a carrier frame during the production of the CCS. The use of FPCs streamlines the integration of the connections into the CCS, resulting in a more efficient and integrated component.

In prismatic battery cells, it is standard practice to connect only a small number of cells in parallel. The contacts are located on the upper surface or end faces of the battery cells. It is important to consider the potential for expansion during charging and vibrations during operation, as these cells are not firmly encapsulated and, due to their design, larger volume changes can occur during charging. Therefore, It is important to ensure tolerance compensation in the busbars, which is achieved through the use of a curved bridge in the connectors. Currently, the CCS for prismatic cells is typically pre-assembled in a plastic frame and attached to the pre-tensioned battery module during module assembly. However, there is an increasing use of laminated CCS.

Exothermic decomposition of cell components may lead to a phenomenon known as thermal runaway. Generally, thermal runaway describes a process that accelerates due to increased temperature, which in turn releases energy that further increases temperature. Thermal runaway occurs when an increase in temperature altars the conditions in a way that causes a further rise in temperature, often leading to a destructive outcome. In rechargeable battery systems, thermal runaway is associated with strong exothermic reactions that are accelerated by temperature rise. During thermal runaway, the battery cell temperature rises incredibly fast and the energy stored is released very suddenly. In extreme cases, thermal runaway can cause battery cells to explode and start fire. In less severe cases, it can cause battery cells to be damaged beyond repair.

When a battery cell is heated above a critical temperature, the battery cell can transition into thermal runaway. Generally, temperatures outside the safe region, either on the low or high side, may lead to irreversible damage to the battery cell and therefore may potentially trigger thermal runaway. Thermal runaway may also occur due to an internal or external short circuit of the battery cell or poor battery maintenance. For example, overcharging or rapid charging may lead to thermal runaway.

During thermal runaway, the failed battery cell may reach a temperature exceeding 700°C. Further, large quantities of hot gas are ejected from inside of the failed battery cell through the venting opening of the cell into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack. In the worst case, the high temperatures lead to the process to spread to neighboring cells, resulting in a fire in the battery pack. At this stage, the fire is hardly impossible to extinguish.

The BMS is critical to the safe operation and optimal performance of rechargeable battery cells and helps minimize the risk of thermal runaway. For example, if the BMS detects that the temperature is too hot, it can regulate the temperature by controlling cooling fans. Alternatively, if the battery cell cannot be cooled and safe conditions restored, the BMS may shut down the affected battery cells to protect the entire system.

### Summary of Invention

The invention is defined by the appended claims. The description that follows is subjected to this limitation. Any disclosure lying outside the scope of the claims is only intended for illustrative as well as comparative purposes.

According to an embodiment, the disclosure relates to a battery pack including a battery pack housing; a battery cell stack including a plurality of rechargeable battery cells, wherein the battery cell stack is accommodated within the battery pack housing; a liquid release system positioned above the rechargeable battery cells, wherein the liquid release system is configured to release a liquid toward the rechargeable battery cells when a release condition is detected; and a retention structure being configured for retaining the liquid released by the liquid release system, wherein the retention structure is in direct contact with an outer surface of the rechargeable battery cells.

Another embodiment of the present disclosure is directed to an electric vehicle including the battery pack.

Further embodiments of the present disclosure could be learned from the dependent claims or the following description.

### Brief Description of the Drawings

Features will become apparent to those of ordinary skill in the art by describing in detail exemplary embodiments with reference to the attached drawings in which:
FIG. 1 is a schematic perspective view of a battery cell stack including a plurality of rechargeable battery cells according to an embodiment;
FIG. 2A is a schematic perspective top view of a retention structure according to an embodiment of the present disclosure;
FIG. 2B is a schematic perspective back view of the retention structure of FIG. 2A;
FIG. 3 is a schematic perspective view of the battery cell stack of FIG. 1 with one retention structure according to FIGS. 2A and 2B mounted on a top side of the battery cell stack;
FIG. 4 is a schematic perspective view of a battery pack including the battery cell stack of FIG. 3;
FIG. 5A is a cross-section view along line A-A of the battery pack illustrated in FIG. 4;
FIG. 5B is a cross-section view along line B-B of the battery pack illustrated in FIG. 4;
FIG. 6A is a schematic cross-section view along line A-A of the battery pack of FIG. 4 illustrating the release of a liquid by a liquid release system;
FIG. 6B is a schematic cross-section view along line B-B of the battery pack of FIG. 4 illustrating the release of a liquid by a liquid release system; and
FIG. 7 is a schematic perspective view of an electric vehicle including a battery pack according to another embodiment of the present disclosure.

### Detailed Description of the Invention

Reference will now be made in detail to embodiments, examples of which are illustrated in the accompanying drawings. The effects and features of the exemplary embodiments, along with their implementation methods, will be described with reference to the accompanying drawings. In the drawings, like reference numerals denote like elements, and redundant descriptions are omitted. The present disclosure, however, may be embodied in various different forms and should not be construed as being limited to the illustrated embodiments. Rather, these embodiments are provided as examples to ensure that the disclosure is thorough and complete, fully conveying the embodiments and features of the present disclosure to those skilled in the art.

Accordingly, processes, elements, and techniques that are not considered essential for a complete understanding of the aspects and features of the present disclosure by those skilled in the art may not be described.

As used herein, the term "and/or" includes all combinations of one or more of the associated listed items. Expressions such as "at least one of", when preceding a list of elements, modify the entire list of elements and not the individual elements within the list. Further, the use of "may" when describing embodiments of the present disclosure refers to "one or more embodiments of the present disclosure." In the following description of embodiments of the present disclosure, a singular form of a term may include plural form unless the context clearly indicates otherwise.

It will be understood that although the terms "first" and "second" are used to describe various elements, these elements should not be limited by these terms. These terms are merely used to distinguish one element from another. For example, a 'first' element may be referred to as a 'second' element, and vice versa, without altering the scope of the present disclosure.

It will be further understood that the terms "include," "comprise," "including," or "comprising" specify a property, a region, a number, a step, a process, an element, a component, or a combination thereof, but do not exclude other properties, regions, numbers, steps, processes, elements, components, or combinations thereof.

The terms "essentially forming" and "consisting essentially of" mean that specific additional components may be present, provided that they do not materially affect the essential characteristics of a composition.

It will also be understood that when a film, a region, or an element is referred to as being "above" or "on" another film, region, or element, it may be directly on the another film, region, or element, or there may be intervening films, regions, or elements.

Herein, the terms 'upper' and 'lower' are defined according to the z-axis. For example, the upper cover is positioned at the upper part of the z-axis, while the lower cover is positioned at the lower part thereof. In the drawings, the sizes of elements, layers, and regions may be exaggerated for clarity. Specifically, in the drawings, the size or thickness of each element may be arbitrarily shown for illustrative purposes, and thus the embodiments of the present disclosure should not be construed as being limited thereto.

Unless otherwise defined, all terms (including technical and scientific terms) used herein shall have the same meanings commonly understood by one of ordinary skill in the relevant art to which the present disclosure belongs. It will be further understood that terms defined in commonly used dictionaries, should be interpreted in a manner consistent with their meaning in the context of the relevant art and/or the present specification, and should not be interpreted in an idealized or overly formal sense, unless expressly so defined herein.

### General Concept

According to an embodiment, the present disclosure relates to a battery pack including a battery pack housing; a battery cell stack including a plurality of rechargeable battery cells, wherein the battery cell stack is accommodated within the battery pack housing; a liquid release system positioned above the rechargeable battery cells, wherein the liquid release system is configured to release a liquid toward the rechargeable battery cells when a release condition is detected; and a retention structure being configured for retaining the liquid released by the liquid release system, wherein the retention structure is in direct contact with an outer surface of the rechargeable battery cells.

In other words, a multitude of rechargeable battery cells is assembled to form a battery cell stack. The rechargeable battery cells are electrically interconnected, for example, in a series and/or in parallel. The battery cell stack may be accommodated within a battery cell stack housing. The battery cell stack as well as other components, such as a cell contacting system (CCS) and a battery management system (BMS), may be accommodated within a battery pack housing. Furthermore, a liquid release system is arranged inside the battery pack housing. In the event of an abnormal behavior in at least one battery cell, the abnormal behavior is detected and consequently a liquid is released by the liquid release system towards the rechargeable battery cells. The malfunction may manifest itself, for example, as a sudden drop in voltage, an abnormal rise in temperature, or a release of significant amounts of hot venting gas from the rechargeable battery cell. On reaching the surface of the rechargeable battery cells, the liquid serves the function of extinguishing or at least counteracting a possible fire, and also cooling the rechargeable battery cell in order to prevent thermal propagation to other rechargeable battery cells. Typically, the liquid tends to flow off the surface of the rechargeable battery cells quickly, so that the cooling effect is only temporary. However, according to the present disclosure, the cooling effect of the liquid may be enhanced by attaching a retention structure directly to an outer surface of the rechargeable battery cells facing the liquid release system. An essential function of the retention structure is to retain the liquid on the surface of the rechargeable battery cells such that the liquid remains longer on the surface of the rechargeable battery cells. In other words, the retention structure extends the residence time of the liquid on the surface of the rechargeable battery cells. Thereby, an effective cooling of the affected rechargeable battery cell is ensured, preventing, or suppressing thermal propagation to other rechargeable battery cells.

According to an embodiment, the rechargeable battery cells may be prismatic. Each prismatic rechargeable battery cell may have a pair of electrode terminals and a venting valve positioned between the pair of electrode terminals on a top side of each rechargeable battery cell. The prismatic rechargeable battery cells may be electrically interconnected, for example, in a series and/or in parallel. The electrical connecting means may include, for example, a busbar, which contacts the respective electrode terminals of the rechargeable battery cells via cell connectors. Further, the rechargeable battery cells may be assembled such that the long sides of the prismatic rechargeable battery cells are arranged adjacent to each other. The assembly may include, in a common first direction, two parallel rows of electrode terminals and a row of venting valves positioned between two parallel rows of electrode terminals. The venting valves may be configured to allow a venting gas stream to escape from the prismatic rechargeable battery cell if an unexpected rise in temperature causes an increase pressure inside the rechargeable battery cell.

According to another embodiment, the liquid release system may be attached onto a first side of the battery pack housing facing the rechargeable battery cells. In case of prismatic rechargeable battery cells, it may be advantageous to mount the liquid release system on the inner side of the battery pack housing, facing the top side of the rechargeable battery cells. This specific arrangement may be beneficial for the assembly process of the battery pack. More precisely, the rechargeable battery cell stack on the one hand, and the liquid release system attached onto the first side of the battery pack housing on the other hand, may be preassembled independently from each other. Further, attaching the liquid release system onto the inner side of the battery pack housing, facing the top side of the rechargeable battery cells, may contribute to an effective release of the liquid. According to the aforementioned arrangement, the liquid release system is located above the rechargeable battery cells, allowing the liquid to flow or trickle down onto the rechargeable battery cells. This may enable the liquid to be released at a lower pressure compared to when the liquid release system was installed, for example, below the rechargeable battery cells, in which case the liquid would have to be pushed upward against gravity. Thereby, it may be possible to dispense with devices for increased pressurization of the liquid by installing the liquid release system above the rechargeable battery cells.

According to yet another embodiment, the liquid release system may be a sprinkler system. When a release condition is detected, such as a temperature increase, a release of hot venting gas, or a sudden voltage drop in at least one rechargeable battery cell, the sprinkler system may release the liquid toward the rechargeable battery cells. The sprinkler system may include a plurality of sprinklers, which may be distributed regularly, e.g. in one or more rows, or irregularly over the first side of the battery pack housing. The installation of a plurality of sprinklers has the advantage that, regardless of the position of the rechargeable battery cell exhibiting an abnormal behavior, the liquid may be released in such a way that the defective rechargeable battery cell is cooled by the liquid.

According to a further embodiment, the liquid being released by the liquid release system may be water. The use of water has various benefits. Firstly, water is a cost-effective liquid. Secondly, water is non-toxic, meaning that no additional safety measures are required, for example, in order to protect workers during the assembly of the battery pack. Thirdly, as water is a common extinguishing agent in sprinkler systems, there is a wide range of commercially available sprinkler systems that can be used as liquid release system. The commercially available sprinkler systems may be installed unchanged or may further be modified. Moreover, water is well suited for heat absorption as water has a relatively high boiling point of 100°C at standard pressure. Accordingly, water can absorb a large amount of heat energy before boiling, ensuring effective cooling of the rechargeable battery cells. When using water, it should be considered that, without the addition of salts, its electric conductivity is relatively low and is caused exclusively by autoprotolysis of water molecules. Nevertheless, it may be advantageous to interrupt the current flow in the battery pack when releasing water, in order to prevent short circuits.

According to yet another embodiment, the retention structure may be integrated into a carrier of a cell contacting system (CCS). This integration may reduce the effort and time required for the assembly of the battery pack, as only one component needs to be mounted, and this component may be preassembled. The carrier may also include components for the electrical connection between the individual rechargeable battery cells, such as busbars.

According to a further embodiment, the retention structure may include outer walls enclosing the entirety of rechargeable battery cells of the battery cell stack; a covering wall arranged between the top side of the rechargeable battery cells and the liquid release system; and inner walls extending between the rechargeable battery cells, wherein the inner walls border to the outer walls and the covering wall. Accordingly, in the case of prismatic rechargeable battery cells, the outer shape of retention structure may, for example, be a cuboid or a cube. The body may remain open on one side and the retention structure may be placed on the top side of the rechargeable battery cells with this open side facing upward. In other words, the retention structure may be placed on the top side of the rechargeable battery cells, with the electrode terminals protruding through the free side of the retention structure. Further, the top side of the rechargeable battery cells, including the electrode terminals and the venting valves, may be enclosed by the outer walls and the covering wall, with the latter located between the top side of the rechargeable battery cells and the liquid release system. The retention structure may also include inner walls extending along the contact side between adjacent rechargeable battery cells, in such a way that the inner walls lie against the covering wall and the outer walls, and segments are formed whose base area essentially corresponds to the surface area of the top side of one or more rechargeable battery cells. Additionally, components for the electrical connection between the individual rechargeable battery cells, such as busbars, may be mounted within the retention structure to ensure electrical connection between the rechargeable battery cells after assembly of the retention structure. Another advantage of using such a retention structure is that the covering wall may provide protection against contact with electrical components, such as, electrode terminals and busbars, during assembly of the battery pack.

According to another embodiment, one inner wall of the retention structure may be arranged between two adjacent rechargeable battery cells forming a segment above each rechargeable battery cell. In other words, the retention structure may be divided into as many segments as there are rechargeable battery cells in the battery cell stack with each rechargeable battery cell being covered by one segment.

According to a further embodiment, the covering wall and the inner walls of the retention structure may be configured to become permeable to the liquid when exerted to a venting gas stream exiting a venting valve, and wherein the outer walls may be configured to retain the liquid on the top side of the rechargeable battery cells. According to the present disclosure, a liquid is released by a liquid release system when a release condition is detected. The release condition may, for example, be a temperature increase, a sudden voltage drop, or a significant release of hot venting gas from one or more rechargeable battery cells. The liquid is then released toward the rechargeable battery cells. An abnormally behaving rechargeable battery cell may release a stream of hot venting gas before or during a thermal runaway event in order to reduce internal pressure and prevent the rechargeable battery cell from inflating or even exploding. The hot venting gas stream may cause the covering wall and the inner walls to become permeable to the liquid due to the effect of heat, such as melting or decomposition of the material essentially forming the covering wall and the inner walls. Depending on the amount of released hot venting gas stream, a smaller or a larger section of the covering wall and the inner walls may become permeable to the liquid released by the liquid release system. This has the advantage that, in the event of the release of hot venting gas stream, the liquid may enter through the permeable section of the covering wall and reach the surface of the affected rechargeable battery cell. Therein, the expression 'section' may refer to either separated or connected areas of the walls in question.

Depending on the amount of hot venting gas released, it may be possible that the covering wall and inner walls of segments adjacent to the segment above the defective rechargeable battery cell to also become permeable to the liquid. Consequently, the liquid may also enter these adjacent segments. In the same way, it is conceivable that wall sections of segments belonging to even more distant rechargeable battery cells could also become permeable to the liquid, allowing the liquid to enter the segments above these rechargeable battery cells as well. Furthermore, the outer walls may be designed to retain the liquid. In this way, a particularly effective cooling may be achieved. When the liquid is released, the liquid may enter, inter alia, the segment above the affected rechargeable battery cell. Since the outer walls may not become permeable, the liquid may not drain off the surface of the top side of the rechargeable battery cell through the outer walls. The segments above the rechargeable battery cells may be each delimited by two outer walls, in the case of the outer rechargeable battery cells of the battery cell stack, the two segments may even be delimited by three outer walls.

Furthermore, the fact that inner walls of retention structure may become permeable to the liquid is particularly beneficial for an effective cooling of the defective rechargeable battery cell. The advantageous effects of this embodiment may be clearly seen in the following example: Due to the release of hot venting gas, the covering wall above two adjacent rechargeable battery cells and the inner walls between the segments of the adjacent rechargeable battery cells and the defective rechargeable battery cell may become permeable to the liquid. When the liquid is released, it may reach the surface of all three rechargeable battery cells, whereby it may evaporate most quickly in the segment above the defective rechargeable battery cell due to the greater heat input. As the inner walls may have become permeable, the liquid may flow from the segments above the two adjacent rechargeable battery cells into the segment above the defective rechargeable battery cell, thereby increasing the amount of liquid available for cooling. Similar considerations also apply to outer rechargeable battery cells of the battery cell stack (in this case, only one adjacent rechargeable battery cell). If larger amounts of hot venting gas are discharged, it is conceivable that the liquid could even enters the segments above more distant rechargeable battery cells, gradually flowing into the segment of the defective rechargeable battery cell as the liquid vaporizes in said segment. This means that, with a larger amount of released hot venting gas, a larger number of sections in the covering wall and the inner walls of the retention structure - even those located farther away from the defective rechargeable battery cell - may become permeable to the liquid. In particular, segments that are located above rechargeable battery cells that are not immediately adjacent to the defective rechargeable battery cell may also be affected. As a result, a larger quantity of the liquid may reach the surface of the rechargeable battery cells. The liquid vaporized on the defective cell may be at least partially replaced by the liquid flowing from these segments.

According to yet another embodiment, the covering wall and the inner walls of the retention structure may essentially consist of a polymer having at least one of a melting and decomposition temperature in the range of 100°C to 300°C, wherein the melting or decomposition temperature is measured according to ISO 11357-1:2023 and ISO 11358-1:2022. The polymer forming the covering wall and the inner walls may contain other components, provided that these components do not interfere with the polymer's ability to ensure permeability of the walls at temperatures between 100°C and 300°C. Such components may include, for example, color pigments or additives that support the processing of the polymeric material. It should be noted that polymers often do not have a defined melting or decomposition point, but rather a temperature range. Regardless, for clarity, only a temperature is referred in the following, even if the melting or decomposition process occurs over a temperature range. Further, according to the disclosure, the temperature of at least one of the above-mentioned processes is within the range of 100°C to 300°C. The temperature of the second process (melting or decomposition) may not necessarily fall within the same temperature range. As a result, the covering wall and the inner walls may maintain stable at the usual operating temperatures of the battery pack. Only at elevated temperatures, caused, for example, by the release of hot venting gas, the covering wall and the inner walls may become permeable to the liquid released by the liquid release system as the polymer melts and/or decomposes on at least part of the covering walls and inner walls of the retention structure.

If at least one of the melting and decomposition temperature of the polymer is below 100°C, this may have a negative impact on the stability of the retention structure under normal working conditions of the battery pack. Increased temperatures during normal operation of a battery system may occur, for example, when high power is demanded or during charging. It is conceivable that, in the event of at least partial decomposition or melting of the polymer, the inner walls may lose stability. This may result in the covering wall no longer being adequately supported and therefore bending or even breaking toward the rechargeable battery cells. Further, it is possible that the decomposition products of the polymer, or the liquid polymer in case of melting, could get onto the top side of the rechargeable battery cells and enter the contacts between the busbars and the electrode terminals, thereby reducing the power output of the battery pack. Further, the decomposition products or the liquid polymer could reach the venting valves and possibly hindering the release of hot venting gas, which lead to overpressure within the rechargeable battery cell and even cause an explosion in the event of a malfunction of the rechargeable battery cell.

If the melting or decomposition temperature of the material is above 300°C, it is possible that the covering wall and the inner walls either do not become permeable to the liquid at all or only become permeable to the liquid after the release of large quantities of hot venting gas. In such a case, the liquid released by the liquid release system either may either be unable to cool the defective rechargeable battery cell at all or cooling may only occur once thermal propagation to other rechargeable battery cells has already occurred.

Possible examples for suitable polymers may include polypropylene homopolymer (PP-H, CAS: 9003-07-0), polycarbonate (PC, 25037-45-0), and crystalline polybutylene terephthalate (PBT, CAS: 24968-12-5). Other polymers may also be suitable, and the aforementioned examples are not intended to limit the scope of the disclosure. In addition, combinations of different polymers may also be used, provided that the mixture has at least one of a melting and decomposition temperature in the range of 100°C to 300°C.

In summary, the covering wall and the inner walls of the retention structure may essentially consist of a polymer with at least one of a melting and decomposition temperature in the range of 100°C to 300°C. The temperature range is selected to ensure stability of the retention structure under normal operating conditions of the battery pack, while also preventing thermal propagation to other rechargeable battery cells.

According to a further embodiment, the outer walls of the retention system may essentially consist of a material that is heat-resistant up to at least 300°C. This means that the outer walls of the retention structure may be made of a different material than the covering wall and/or the inner walls of the retention structure. Consequently, the outer walls may essentially consist of a more heat-resistant material than the covering wall and the inner walls. 'Heat-resistant' means that no significant changes in the macroscopic appearance of the material occur when the material is heated up to 300°C for a limited period of time. This means that the material, for example, neither melts nor decomposes at temperatures below or equal to 300°C. Possible examples of suitable materials may include polyether ether ketone (PEEK, CAS: 29658-26-2) and inorganic minerals such as micas. Other materials may also be suitable, and the aforementioned examples are not intended to limit the scope of the disclosure. The choice of a material that is heat-resistant up to 300°C is advantageous because, unlike the covering wall and the inner walls of the retention structure, the outer walls may remain essentially unaltered by the release of a hot venting gas stream. Therefore, stability of the retention structure may be ensured. Further, the liquid released by the liquid release system may not flow off the top side of the rechargeable battery cells as the outer walls have not become permeable to the liquid.

According to another embodiment, the outer walls may be at least twice as thick in cross-section as the inner walls, and wherein the outer walls may essentially consist of a polymer having at least one of a melting and decomposition temperature in the range of 100°C to 300°C, wherein the melting or decomposition temperature is measured according to ISO 11357-1:2023 and ISO 11358-1:2022. In other words, the outer walls of the retention structure may essentially consist of a polymer that melts or decomposes within a temperature range of 100°C to 300°C. The polymer used for the outer walls may be the same polymer as that used for the covering wall and the inner walls of the retention structure. However, it may also be possible to use a different polymer or a mixture of several polymers, provided that the mixture has at least one of a melting and decomposition temperature in the range of 100°C to 300°C. In contrast to the covering wall and the inner walls, the outer walls may be at least twice as thick in cross-section. Thicker outer walls may be also conceivable, e.g. three or four times as thick as the covering wall and the inner walls. In principle, the thickness of the outer walls may be sufficient to withstand a hot venting gas stream for at least a limited period of time without becoming permeable to the liquid released by the liquid release system. However, the maximum thickness of the outer walls may be limited to the factors such as additional weight and spatial expansion of the outer walls in the battery pack. The latter aspects may be particularly relevant for battery packs in mobile application. In summary, a appropriately chosen thickness for the outer walls, which essentially consisting of a polymer with a melting and/or decomposition temperature in the range of 100°C to 300°C, may ensure that the outer walls do not become permeable to the liquid in the event of hot venting gas release. This ensures effective cooling of the affected rechargeable battery cell. Furthermore, regarding the assembly process, it is conceivable that that all walls of the retention structure, including the covering wall, the inner walls and the outer walls, are essentially made of the same material and essentially differing only in their thickness. This approach may simplify the assembly process and make it more cost-effective.

According to a further embodiment, the aforementioned battery pack may also include a battery management system (BMS), configured to determine the release condition when an abnormal behavior of a rechargeable battery cell - leading to or indicating a thermal runaway event - is detected, and configured to activate the liquid release system when the release condition is determined. As outlined above, a BMS may be any suitable electronic system configured to manage the rechargeable battery cells within the battery pack, such as by protecting the rechargeable battery cells from operating outside their safe operating range, monitoring their states, calculating secondary data, reporting that data, controlling their environment, authenticating them and/or balancing them. The abnormal behavior may include, for example, a temperature increase, a sudden voltage drop, or a release of hot venting gas. Furthermore, the BMS may be configured to detect such a malfunction of a rechargeable battery cell by measuring, for example, the temperature and voltage of the rechargeable battery cells as well as the temperature at different positions within the battery pack housing. If an abnormal temperature increase or a sudden voltage drop is detected - in other words if the release condition is determined - the BMS may activate the liquid release system, releasing toward the rechargeable battery cells. Since battery management systems are already commonly used to monitor the proper functioning of rechargeable battery cells, inter alia, only a link or exchange of information between the BMS and the liquid release system may be necessary. This enables the liquid to be released by the liquid release system on detecting abnormal behavior in a rechargeable battery cell.

Yet another embodiment pertains to an electric vehicle that includes the above-mentioned battery pack.

### Specific Embodiments

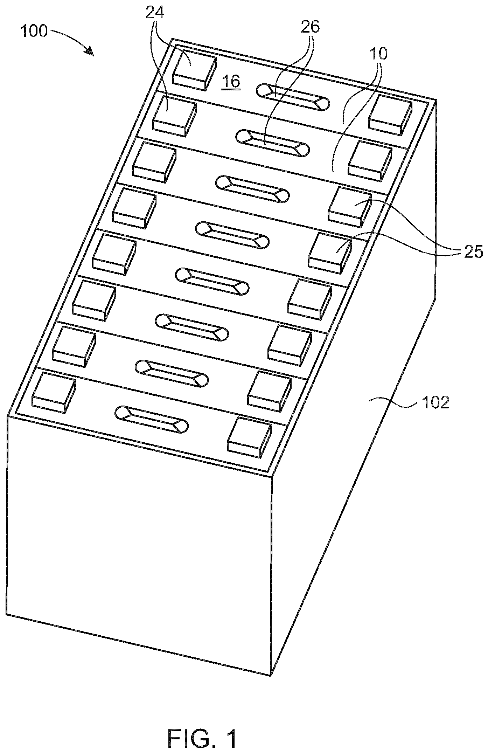

FIG. 1 is a perspective view illustrating a battery cell stack 100 according to an embodiment. The battery cell stack 100 includes a plurality of rechargeable battery cells 10 accommodated within a battery cell stack housing 102. The rechargeable battery cells 10 are assembled in a row in a first direction and each rechargeable battery cell 10 includes a pair of electrode terminals 24, 25 and a venting valve 26 between the pair of electrode terminals 24, 25 on a top side 16 of a rechargeable battery cell 10. Thus, the exemplary assembly of rechargeable battery cells 10 leads to a first row of electrode terminals 24 and a second row of electrode terminals 25 as well as a row of venting valves 26 positioned therebetween.

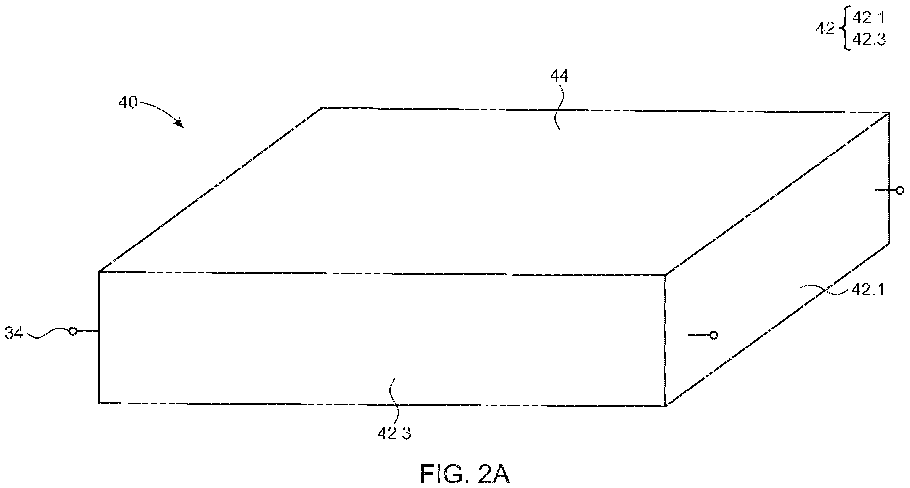

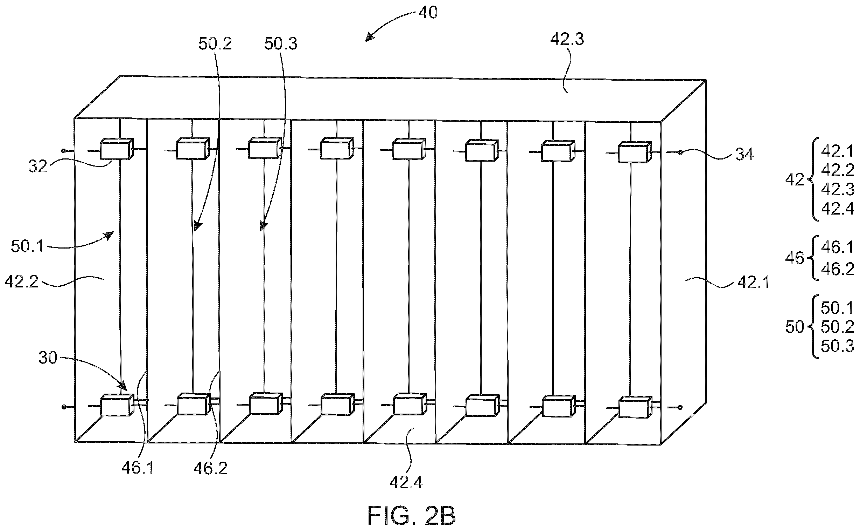

FIGS. 2A and 2B respectively show a perspective top view and a perspective back view of a retention structure 40, including a mounted busbar 30, according to an embodiment of the present disclosure. The retention structure 40 is shaped like a cuboid, with one side of the cuboid remains open. More precisely, the outer shape of the retention structure 40 is created by four outer walls 42 and a covering wall 44 connecting the outer walls 42. The side opposite the covering wall 44 remains open and allows the electrode terminals 24, 25 of rechargeable battery cells 10 (not shown) to protrude when the retention structure 40 is mounted on the top side 16 of the rechargeable battery cells 10. Further, a plurality of inner walls 46 extend parallel to the outer walls 42.1, 42.2 and border to the other outer walls 42.3, 42.4 and the covering wall 44 creating a plurality of separated segments 50. The dimensions of the outer walls 42 correspond to the dimensions of the entirety of the rechargeable battery cells 10 and the inner walls 46 extend along the contact sides between adjacent rechargeable battery cells 10. As a result, the number of segments 50 formed within the retention structure 40 corresponds to the number of rechargeable battery cells 10 within the battery cell stack 100.

As shown in detail in FIG. 2B, two busbars 30 are mounted in the retention structure 40. Each busbar 30 includes electrode connectors 32 for electronically connecting to the electrode terminals 24, 25 of rechargeable battery cells 10 (not shown) and busbar connectors 34 for connecting the busbars 30 to further components of a high-voltage part of the cell contacting system, CCS.

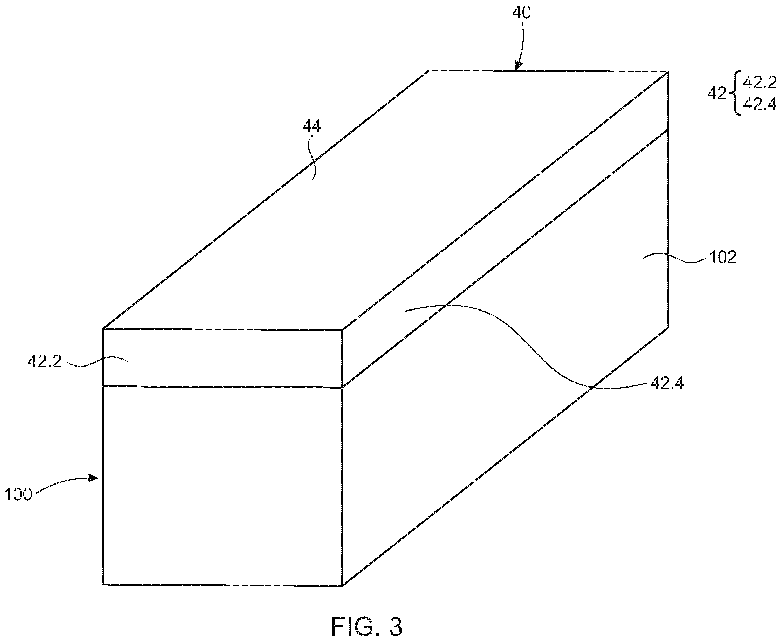

FIG. 3 is a perspective view of the battery cell stack 100 of FIG. 1 with a retention structure 40 according to FIGS. 2A and 2B mounted on a top side 16 of the rechargeable battery cells 10. The electrode terminals 24, 25 protrude through the open side of the retention structure 40 such that the top side 16 of the rechargeable battery cells 10 is opposed to the covering wall 44 of the retention structure 40. Further, in the mounted position, the busbars 30 are electronically connected via the electrode connectors 32 to the electrode terminals 24, 25 of the rechargeable battery cells 10 (not shown).

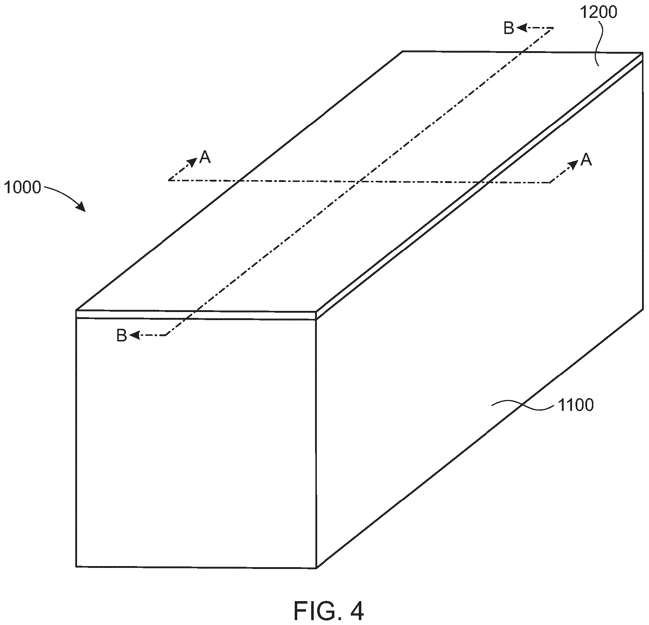

FIG. 4 represents a battery pack 1000 including a battery pack housing 1100, wherein at least one battery cell stack 100, for example, a battery cell stack 100 as illustrated in FIG. 3 is accommodated within the battery pack housing 1100. The liquid release system 60 (not shown) is located within the battery pack housing 1100. More precisely, it is attached to a first side 1200 of the battery pack housing 1100. The first side 1200 of the battery pack housing 1100 is the top cover of the battery pack housing 1100.

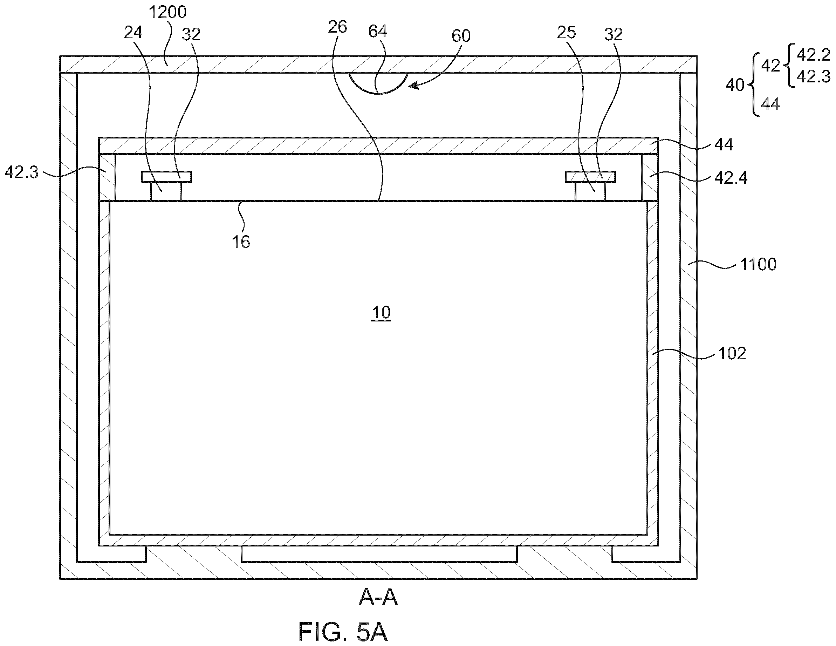

FIG. 5A shows a cross-section of the battery pack 1000 along line A-A shown in FIG. 4. As illustrated, the retention structure 40 encases the top side 16 of the rechargeable battery cells 10. Further, a liquid release system 60 is attached onto a first side 1200 of the battery pack housing 1100 such that the covering wall 44 of the retention structure 40 is located between the liquid release system 60 and the top side 16 of the rechargeable battery cells 10. The liquid release system 60 is a sprinkler system, wherein exemplarily one sprinkler 64 is shown in this figure.

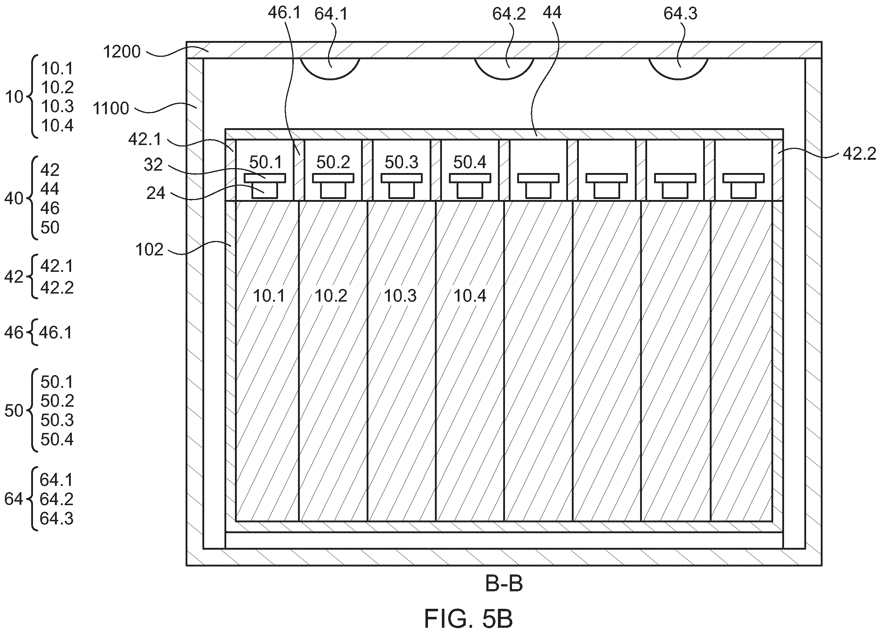

FIG. 5B shows a cross-section of the battery pack 1000 along line B-B shown in FIG. 4, and also shows cross-sections of a plurality of the rechargeable battery cells 10. As it can be seen in this perspective, one segment 50 of the retention structure 40 is located above each rechargeable battery cell 10 of the battery cell stack 100, wherein the segments 50 are separated from each other by inner walls 46 of the retention structure 40. The liquid release system 60 is attached onto a first side 1200 of the battery pack housing 1100. Further, the liquid release system 60 is a sprinkler system including a plurality of sprinklers 64, wherein the sprinklers 64 are distributed over the first side 1200 of the battery pack housing 1100.

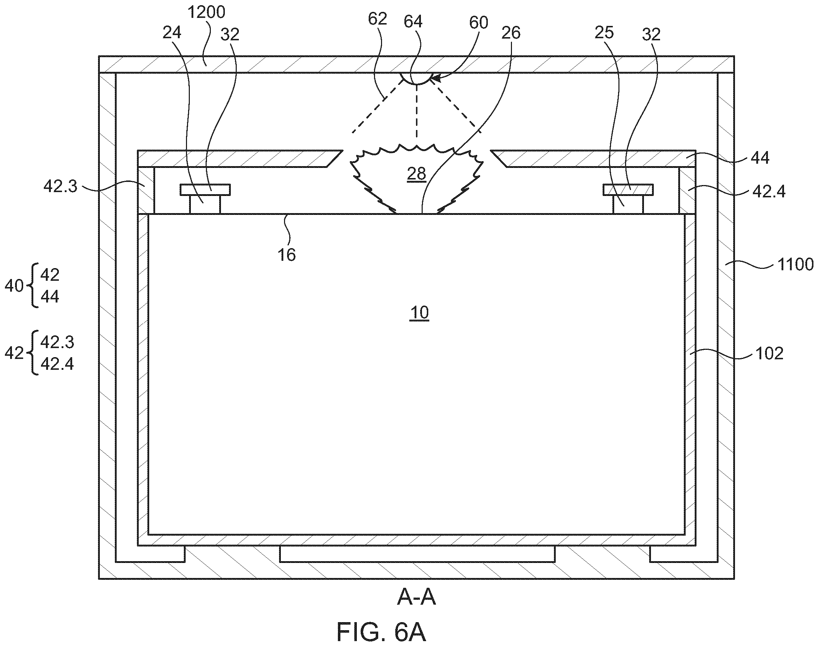

FIG. 6A schematically illustrates what will happen if a venting gas stream 28, which is typically at a high temperature, escapes through a venting valve 26 of a rechargeable battery cell 10 being assembled in the battery cell stack 100 within the battery pack housing 1100 according to the perspective of FIG. 5A. As can be seen, the venting gas stream 28 passes through the venting valve 26 positioned on the top side 16 of the rechargeable battery cell 10. The venting gas stream 28 will reach the retention structure 40 and heat up the walls 42, 44, 46. When the temperature of the covering wall 44 and the inner walls 46 (not shown) exceeds a given threshold (i.e. a temperature in the range of 100°C to 300°C), the heated area of the walls 44 and 46 will become permeable to the liquid 62. The release of the liquid 62 by the liquid release system 60 is triggered by the detection of an abnormal behavior of a rechargeable battery cell 10 by a battery management system, BMS, (not shown) by means of detecting, for example, a temperature increase and/or a voltage drop of the defective rechargeable battery cell 10. When detecting the abnormal behavior of the rechargeable battery cell 10, the liquid release system 60 will release the liquid 62 toward the rechargeable battery cells 10. Since the covering wall 44 has become permeable to the liquid 62 due to (at least) partially melting and/or decomposing, the liquid 62 reaches the top side 16 of the affected rechargeable battery cell 10, thereby contributing to the cooling of the rechargeable battery cell 10 and preventing thermal propagation to other rechargeable battery cells 10. The outer walls 42 are configured to retain the liquid 62 such that the liquid 62 does not flow off the top side 16 of the rechargeable battery cells 10.

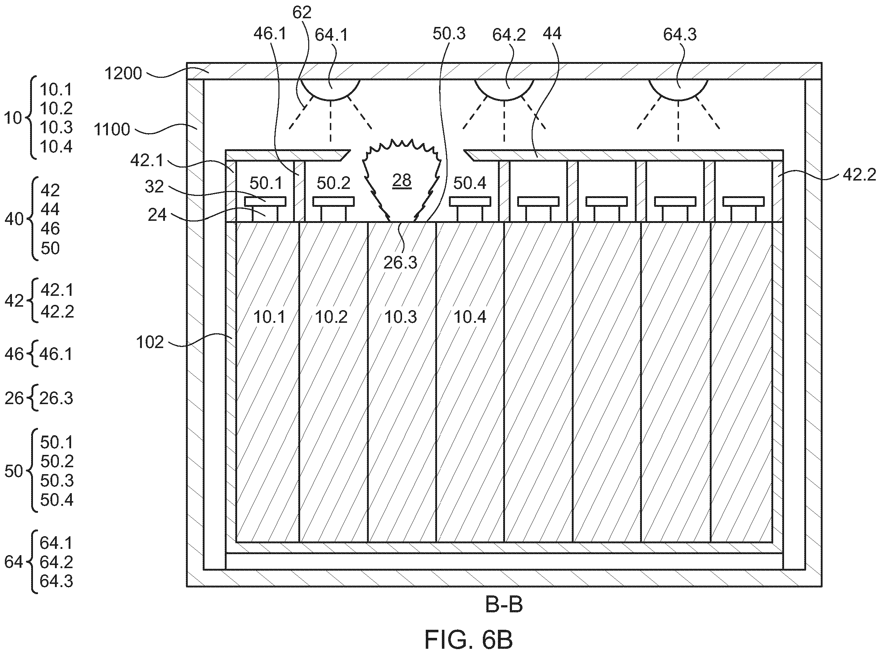

FIG. 6B schematically illustrates what will happen if a venting gas stream 28 escape through a venting valve 26 of a rechargeable battery cell 10 being assembled in the battery cell stack 100 within the battery pack housing 1100 according to the perspective of FIG. 5B. As an example, the venting gas stream 28 is discharged through a venting valve 26.3 of the rechargeable battery cell 10.3. Due to heat effect of the venting gas stream 28, the covering wall 44 becomes permeable in an area extending above the rechargeable battery cell 10.3 as well as partially above the adjacent rechargeable battery cells 10.2, 10.4. As the inner walls 46.2 and 46.3 also at least partially melt or decompose, the released liquid 62 primarily reaches the surfaces of the rechargeable battery cells 10.2, 10.3, 10.4 and then flows from the adjacent segments 50.2, 50.4 into the segment 50.3 above the affected rechargeable battery cell 10.3 as soon as the liquid 62 has evaporated above the defective rechargeable battery cell 10.3. The cooling effect is significantly improved by the flow of the liquid 62 from the adjacent segments 50.2, 50.4.

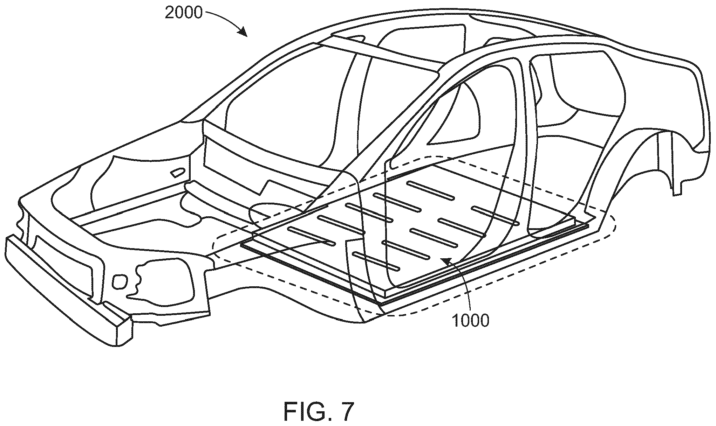

The battery pack 1000 can be an operating component of an electric vehicle 2000. FIG. 7 is a perspective view of such an electric vehicle 2000 in which the battery pack 1000 including at least one battery cell stack 100 is installed.

### Reference signs

- 10: rechargeable battery cell
- 16: top side of rechargeable battery cell
- 24, 25: electrode terminals
- 26: venting valves
- 28: venting gas stream
- 30: busbars
- 32: electrode connectors
- 34: busbar connectors
- 40: retention structure
- 42: outer wall of retention structure
- 44: covering wall of retention structure
- 46: inner wall of retention structure
- 50: segment
- 60: liquid release system
- 62: liquid
- 64: sprinkler
- 100: battery cell stack
- 102: battery cell stack housing
- 1000: battery pack
- 1100: battery pack housing
- 1200: first side of battery pack housing

## Claims

1. A battery pack (1000), comprising:
a battery pack housing (1100);
a battery cell stack (100) comprising a plurality of rechargeable battery cells (10), wherein the battery cell stack (100) is accommodated within the battery pack housing (1100);
a liquid release system (60) positioned above the rechargeable battery cells (10), wherein the liquid release system (60) is configured to release a liquid (62) toward the rechargeable battery cells (10) when a release condition is detected; and
a retention structure (40) being configured for retaining the liquid (62) released by the liquid release system (60), wherein the retention structure (40) is in direct contact with an outer surface of the rechargeable battery cells (10).

2. The battery pack (1000) as claimed in claim 1, wherein the rechargeable battery cells (10) are prismatic, wherein each rechargeable battery cell (10) has a pair of electrode terminals (24, 25) and a venting valve (26) positioned between the pair of electrode terminals (24, 25) on a top side (16) of the rechargeable battery cells (10).

3. The battery pack (1000) as claimed in claims 1 or 2, wherein the liquid release system (60) is attached onto a first side (1200) of the battery pack housing (1100) facing the rechargeable battery cells (10).

4. The battery pack (1000) as claimed in any one of the preceding claims, wherein the liquid release system (60) is a sprinkler system including at least a sprinkler (64).

5. The battery pack (1000) as claimed in any one of the preceding claims, wherein the liquid (62) being released by the liquid release system (60) is water.

6. The battery pack (1000) as claimed in any one of the preceding claims, wherein the retention structure (40) is integrated into a carrier of a cell contacting system.

7. The battery pack (1000) as claimed in any one of the preceding claims, wherein the retention structure (40) comprises:
outer walls (42) enclosing the entirety of rechargeable battery cells (10) of the battery cell stack (100);
a covering wall (44) arranged between the top side (16) of the rechargeable battery cells (10) and the liquid release system (60); and
inner walls (46) extending between the rechargeable battery cells (10), wherein the inner walls (46) border to the outer walls (42) and the covering wall (44).

8. The battery pack (1000) as claimed in claim 7, wherein one inner wall (46) of the retention structure (40) is arranged between two adjacent rechargeable battery cells (10) forming a segment (50) within the retention structure (40) above each rechargeable battery cell (10).

9. The battery pack (1000) as claimed in claims 7 or 8, wherein the covering wall (44) and the inner walls (46) of the retention structure (40) are configured to become permeable to the liquid (62) when exerted to a venting gas stream (28) exiting a venting valve (26), and wherein the outer walls (42) are configured to retain the liquid (62) on the top side (16) of the rechargeable battery cells (10).

10. The battery pack (1000) as claimed in claim 9, wherein the covering wall (44) and the inner walls (46) of the retention structure (40) essentially consist of a polymer having at least one of a melting and decomposition temperature in the range of 100°C to 300°C, wherein the melting or decomposition temperature is measured according to ISO 11357-1:2023 and ISO 11358-1:2022.

11. The battery pack (1000) as claimed in claim 9, wherein the outer walls (42) of the retention structure (40) essentially consist of a material being heat-resistant up to at least 300°C.

12. The battery pack (1000) as claimed in claim 9, wherein the outer walls (42) are at least twice as thick in cross-section as the inner walls (46), and wherein the outer walls (42) essentially consist of a polymer having at least one of a melting and decomposition temperature in the range of 100°C to 300°C, wherein the melting or decomposition temperature is measured according to ISO 11357-1:2023 and ISO 11358-1:2022.

13. The battery pack (1000) as claimed in any one of the preceding claims, further includes a battery management system, configured to determine the release condition when an abnormal behavior of a rechargeable battery cell (10) leading to or indicating a thermal runaway event is detected, and configured to activate the liquid release system (60) when the release condition is determined.

14. An electric vehicle (2000) comprising the battery pack (1000) as claimed in any one of the preceding claims.

## Amended claims

### Amended claims in accordance with Rule 137(2) EPC.

1. A battery pack (1000), comprising:
a battery pack housing (1100);
a battery cell stack (100) comprising a plurality of rechargeable battery cells (10), wherein the battery cell stack (100) is accommodated within the battery pack housing (1100);
a liquid release system (60) positioned above the rechargeable battery cells (10), wherein the liquid release system (60) is configured to release a liquid (62) toward the rechargeable battery cells (10) when a release condition is detected; and
a retention structure (40) being configured for retaining the liquid (62) released by the liquid release system (60), wherein the retention structure (40) is in direct contact with an outer surface of the rechargeable battery cells (10), the retention structure (40) comprising outer walls (42) enclosing the entirety of rechargeable battery cells (10) of the battery cell stack (100), and a covering wall (44) arranged between the top side (16) of the rechargeable battery cells (10) and the liquid release system (60), wherein the covering wall (44) is configured to become permeable to the liquid (62) when exerted to a venting gas stream (28) exiting a venting valve (26), and wherein the outer walls (42) are configured to retain the liquid (62) on the top side (16) of the rechargeable battery cells (10).

2. The battery pack (1000) as claimed in claim 1, wherein the rechargeable battery cells (10) are prismatic, wherein each rechargeable battery cell (10) has a pair of electrode terminals (24, 25) and a venting valve (26) positioned between the pair of electrode terminals (24, 25) on a top side (16) of the rechargeable battery cells (10).

3. The battery pack (1000) as claimed in claims 1 or 2, wherein the liquid release system (60) is attached onto a first side (1200) of the battery pack housing (1100) facing the rechargeable battery cells (10).

4. The battery pack (1000) as claimed in any one of the preceding claims, wherein the liquid release system (60) is a sprinkler system including at least a sprinkler (64).

5. The battery pack (1000) as claimed in any one of the preceding claims, wherein the liquid (62) being released by the liquid release system (60) is water.

6. The battery pack (1000) as claimed in any one of the preceding claims, wherein the retention structure (40) is integrated into a carrier of a cell contacting system.

7. The battery pack (1000) as claimed in any one of the preceding claims, wherein the retention structure (40) further comprises inner walls (46) extending between the rechargeable battery cells (10), wherein the inner walls (46) border to the outer walls (42) and the covering wall (44).

8. The battery pack (1000) as claimed in claim 7, wherein one inner wall (46) of the retention structure (40) is arranged between two adjacent rechargeable battery cells (10) forming a segment (50) within the retention structure (40) above each rechargeable battery cell (10).

9. The battery pack (1000) as claimed in claims 7 or 8, wherein the inner walls (46) of the retention structure (40) are configured to become permeable to the liquid (62) when exerted to a venting gas stream (28) exiting a venting valve (26).

10. The battery pack (1000) as claimed in claim 9, wherein the covering wall (44) and the inner walls (46) of the retention structure (40) essentially consist of a polymer having at least one of a melting and decomposition temperature in the range of 100°C to 300°C, wherein the melting or decomposition temperature is measured according to ISO 11357-1:2023 and ISO 11358-1:2022.

11. The battery pack (1000) as claimed in claim 1, wherein the outer walls (42) of the retention structure (40) essentially consist of a material being heat-resistant up to at least 300°C.

12. The battery pack (1000) as claimed in claim 9, wherein the outer walls (42) are at least twice as thick in cross-section as the inner walls (46), and wherein the outer walls (42) essentially consist of a polymer having at least one of a melting and decomposition temperature in the range of 100°C to 300°C, wherein the melting or decomposition temperature is measured according to ISO 11357-1:2023 and ISO 11358-1:2022.

13. The battery pack (1000) as claimed in any one of the preceding claims, further includes a battery management system, configured to determine the release condition when an abnormal behavior of a rechargeable battery cell (10) leading to or indicating a thermal runaway event is detected, and configured to activate the liquid release system (60) when the release condition is determined.

14. An electric vehicle (2000) comprising the battery pack (1000) as claimed in any one of the preceding claims.
